# EUROPÄISCHE PATENTSCHRIFT

(11) **EP 3 679 392 B1**
(45) Veröffentlichungstag und Bekanntmachung des Hinweises auf die Patenterteilung: **09.06.2021**
(21) Anmeldenummer: 19717780.1
(22) Anmeldetag: 04.04.2019
(51) Int. Cl.: G01S 7/40, G01S 7/497, G01S 7/52, G01S 15/931, G01S 17/931, G01S 13/931

(54) **VERFAHREN UND STEUERVORRICHTUNG ZUM ERKENNEN EINER FEHLFUNKTION ZUMINDEST EINES UMFELDSENSORS EINES KRAFTFAHRZEUGS**
METHOD AND CONTROL DEVICE FOR DETECTING A MALFUNCTION OF AT LEAST ONE ENVIRONMENT SENSOR OF A MOTOR VEHICLE
PROCÉDÉ ET DISPOSITIF DE COMMANDE DESTINÉS À RECONNAÎTRE UN MAUVAIS FONCTIONNEMENT D'AU MOINS UN CAPTEUR D'ENVIRONNEMENT D'UN VÉHICULE AUTOMOBILE

(30) Priorität: 10.04.2018 DE 102018205322
(43) Veröffentlichungstag der Anmeldung: 15.07.2020
(73) Patentinhaber: Audi AG, 85045 Ingolstadt (DE)
(72) Erfinder: BRUNS, Erich, 85049 Ingolsadt (DE); VENATOR, Moritz, 85049 Ingolsadt (DE)
(86) Internationale Anmeldenummer: PCT/EP2019/058460
(87) Internationale Veröffentlichungsnummer: WO 2019/197260

(56) Entgegenhaltungen:
- DE-A1-102011 084 264
- DE-A1-102014 226 020
- US-A1- 2015 362 587

## Beschreibung

Die Erfindung betrifft ein Verfahren zum Erkennen einer Fehlfunktion zumindest eines Umfeldsensors eines Kraftfahrzeugs. Die Fehlfunktion kann erkannt werden, während das Kraftfahrzeug entlang eines Straßennetzes fährt. Zu der Erfindung gehört auch ein Steuergerät zum Durchführen des Verfahrens.

Für die Weiterentwicklung von Fahrerassistenzsystemen und automatisierten Fahrfunktionen wird eine immer weiter steigende Zahl von Informationen über die Fahrzeugumgebung benötigt, die von Umfeldsensoren erfasst werden. Als Umfeldsensoren detektieren Kamera-, Radar- und Lasersensoren und klassifizieren Objekte im Fahrzeugumfeld (z. B. Fahrzeuge, Fußgänger, Verkehrszeichen, Fahrbahnmarkierungen und -begrenzungen) und geben diese Informationen an die entsprechenden Steuergeräte weiter. Auf Basis dieser Umfeldwahrnehmung können dann Fahrerassistenzfunktionen wie der Spurhalteassistent, die Verkehrszeichenerkennung oder die automatische Notbremsfunktion umgesetzt werden. Im Hinblick auf die Entwicklung hochautomatisierter Fahrfunktionen (Level 3-5) wird in Zukunft eine deutlich höhere Anzahl von Sensoren für die Wahrnehmung der Fahrzeugumgebung benötigt, um eine 360°-Umfeldüberwachung zu ermöglichen.

Mit steigendem Funktionsumfang und zunehmender Sensoranzahl wachsen auch die Anforderungen an den Verbau und die Kalibrierung dieser Sensoren. Um einen sicheren Betrieb automatisierter Fahrfunktionen zu gewährleisten, muss kontinuierlich sichergestellt sein, dass die Sensoren sich in einem ordnungsgemäßen Zustand befinden. Störungen und Fehler von Sensoren können in zwei Hauptkategorien unterteilt werden:
1) Sensorblindheit: Durch Verschmutzung oder Wettereinflüsse (z. B. Nebel, starker Regen) sind das Sichtfeld und/oder die Reichweite des Sensors eingeschränkt; die Performance der Wahrnehmungsfunktionen (Detektionsrate) nimmt ab. Die Störung tritt temporär auf, bis die Ursache behoben ist.
2) Dekalibrierung: Die korrekte Kalibrierung eines Sensors stellt sicher, dass die Position eines vom Sensor detektierten Objektes in ein fahrzeug- /sensorübergreifendes Koordinatensystem transformiert werden kann. Dazu müssen sowohl die intrinsischen (sensorinternen) als auch extrinsischen (Sensorlage) Parameter genau bestimmt werden. Eine fehlerhafte Kalibrierung eines Sensors kann z. B. durch einen mangelhaften Verbau des Sensors (außerhalb der spezifizierten Toleranzen), Dejustierung (z. B. durch eine Kollision) oder eine fehlgeschlagene Kalibrierungsroutine hervorgerufen werden.

Fahrzeugintern ist derzeit eine umfassende Überprüfung des Sensorsystems nur durch den Einbau einer entsprechenden Messtechnik und Erprobungssoftware ins Fahrzeug möglich (wie in Entwicklungsfahrzeugen umgesetzt). In Serienfahrzeugen gibt es die Möglichkeit, mithilfe spezieller Bildverarbeitungsalgorithmen eine Eigendiagnose durchzuführen, die Einschränkungen durch Verschmutzung und Wetterverhältnisse in der Wahrnehmung identifiziert (Blindheitserkennung). Geringe Abweichungen in den Kalibrierungsparametern können durch Online-Kalibrierungsalgorithmen während der Fahrt korrigiert werden, die sich anhand von Landmarken (z. B. Spurmarkierungen) orientieren. Eine umfassende Überprüfung und Neukalibrierung des Sensorsystems kann allerdings nur durch den Kundendienst erfolgen.

Die Vernetzung von Fahrzeugen über mobile Datennetzwerke ermöglicht es, drahtlos auf die Sensor- und Busdaten von Kundenfahrzeugen aus der Ferne zuzugreifen. So können beispielsweise Bild- und Datenströme an ein Backend gesendet werden. Dort können durch die Verarbeitung dieser sogenannten Schwarmdaten bereits Erkenntnisse z. B. in Bezug auf das Nutzer- und Systemverhalten sowie die Umgebungsbedingungen (Wetter, Fahrbahnzustand, Stau etc.) gewonnen werden.

Eine Eigendiagnose eines Sensorsystems mit zumindest einem Umfeldsensor versucht also, Störungen eines Umfeldsensors anhand auffälliger Muster und spezieller Algorithmen zu detektieren. Dabei besteht jedoch das Problem, dass in einem Kraftfahrzeug eine Referenzwahrheit (Ground Truth) nicht bekannt ist. Bei einer Blindheitserkennung (ein Umfeldsensor erkennt keine Objekte) bedeutet das beispielsweise, dass nicht zweifelsfrei festgestellt werden kann, ob eine eingeschränkte Sicht oder fehlende Objekte die Ursache dafür sind, dass keine Objekte im Umfeld des Kraftfahrzeugs detektiert werden. Die Überprüfung einer korrekten Kalibrierung ist aufgrund der fehlenden Referenzwahrheit betreffend die Positionen tatsächlich vorhandener Objekte ebenfalls nicht möglich. Geeignete Messbedingungen sind nur in einer Servicewerkstatt bereitstellbar.

Das Aufsuchen einer Servicewerkstatt ist aber für einen Benutzer eines Kraftfahrzeugs mit Aufwand verbunden, weshalb man sehr daran interessiert ist, eine zuverlässige Erkennung einer Fehlfunktion zumindest eines Umfeldsensors in einem Kraftfahrzeug im normalen Fahrbetrieb bereitzustellen. Eine zu hohe Fehlalarmrate würde dabei aber zu einer unnötigen Unterbrechung des Fahrbetriebs zum Aufsuchen einer Servicewerkstatt führen. Eine zu hohe Detektionsschwelle für Fehlfunktionen könnte dagegen insbesondere bei automatisierten Fahrfunktionen, wenn die Umfeldsensoren von einem Autopiloten zum automatisierten Führen des Kraftfahrzeugs genutzt wird, zu einer Gefährdung eines Benutzers des Kraftfahrzeugs führen.

Aus der DE 10 2013 225 563 A1 ist eine Eigendiagnose für einen Drucksensor und einen Temperatursensor und einen Helligkeitssensor und einen Regensensor eines Kraftfahrzeugs bekannt. Das Kraftfahrzeug empfängt hierbei aus zumindest einem anderen Kraftfahrzeug dessen Sensordaten eines vergleichbaren Sensors. Hierdurch stehen dann in dem Kraftfahrzeug Referenzdaten zur Verfügung. Dieses Verfahren setzt aber voraus, dass die Kraftfahrzeuge ähnliche Sensoren verwenden, damit deren Sensordaten vergleichbar sind. Zudem ist dieses Verfahren nur geeignet, direkt zwei Sensoren zu vergleichen, um hieran einen defekten Sensor zu erkennen. Zudem müssen die Vergleichsmessungen zeitgleich stattgefunden haben, da sich die verglichenen Messgrößen mit der Zeit ändern.

Aus der DE 10 2015 217 771 A1 ist bekannt, dass in einem Kraftfahrzeug bei Verwendung mehrerer Sensoren deren Sensorsignale verglichen werden können, um hierdurch erkennen zu können, ob einer der Sensoren ausgefallen ist. Hierdurch lässt sich ein Totalausfall eines Sensors erkennen. Für den Fall allerdings, dass tatsächlich kein Messsignal vorliegt und stattdessen der andere Sensor, der ein Messsignal erzeugt, dies nur aufgrund eines Defektes tut (er also beispielsweise Rauschen erzeugt), würde es hier zu einer Verwechselung kommen.

Aus der DE 103 33 323 A1 ist bekannt, in einem Kraftfahrzeug redundante Sensoren bereitzustellen, um die Sensoren gegenseitig überwachen zu können. Dies erfordert aber den hohen Installationsaufwand mehrerer Sensoren.

Aus der DE 10 2014 226 020 A1 ist ein Verfahren zum Erkennen einer Fehlfunktion eines Umfeldsensors eines Kraftfahrzeugs bekannt.

Der Erfindung liegt die Aufgabe zugrunde, in einem Kraftfahrzeug für zumindest einen Umfeldsensor, mit welchem Objekte in einem Umfeld des Kraftfahrzeugs detektierbar sind, eine verbesserte Erkennung einer Fehlfunktion bereitzustellen.

Die Aufgabe wird durch die Gegenstände der unabhängigen Patentansprüche gelöst. Vorteilhafte Ausführungsformen der Erfindung sind durch die abhängigen Patentansprüche, die folgende Beschreibung sowie die Figuren beschrieben.

Durch die Erfindung ist ein Verfahren zum Erkennen einer Fehlfunktion von zumindest einem Umfeldsensor eines Kraftfahrzeugs bereitgestellt. Der zumindest eine Umfeldsensor wird hierzu betrieben, während das Kraftfahrzeug einen vorbestimmten Streckenabschnitt eines Straßennetzes passiert, also hindurch fährt oder daran vorbeifährt. Dieser Streckenabschnitt ist im Folgenden als Gatebereich (Torbereich) bezeichnet. Anhand von jeweiligen Sensordaten des zumindest einen Umfeldsensors werden jeweilige Detektionsdaten ermittelt. Die jeweiligen Detektionsdaten beschreiben jeweils, welches zumindest eine Objekt in dem Gatebereich anhand der Sensordaten des jeweiligen Umfeldsensors erkannt wurde. Die Detektionsdaten geben also an, welches zumindest eine Objekt im Umfeld des Kraftfahrzeugs erfasst oder detektiert werden konnte. Die Detektionsdaten können aus den Sensordaten beispielweise auf der Grundlage einer Objekterkennung gebildet werden. Die Objekterkennung kann in den Sensordaten das zumindest eine Objekt erkennen, beispielweise segmentieren. Zudem kann eine Form und/oder eine relative Position des jeweiligen Objekts bezüglich des Kraftfahrzeugs erkannt werden und durch die Detektionsdaten beschrieben werden. Beispielsweise können die Detektionsdaten aus den Sensordaten auf der Grundlage eines künstlichen neuronalen Netzwerks und/oder eines bildverarbeitenden Algorithmus gebildet werden.

Um nun den zumindest einen Umfeldsensor auf eine Fehlfunktion hin prüfen zu können, werden in dem Kraftfahrzeug Referenzdaten, die zumindest ein in dem Gatebereich tatsächlich vorhandenes Objekt beschreiben, bereitgehalten. Anhand der Referenzdaten ist also bekannt, ob sich tatsächlich ein Objekt in dem Gatebereich befindet und welches zumindest eine Objekt in dem Gatebereich angeordnet ist. Bei einem solchen Objekt handelt es sich insbesondere jeweils um einen stationären Gegenstand, das heißt eine Landmarke (zum Beispiel ein Straßenschild oder eine Ampel oder eine Lampe oder eine Brücke) oder eine Struktur (beispielsweise ein bestimmter Bodenbelag oder eine Grasfläche oder ein Gerüst). Es wird nun eine Abweichung der jeweiligen Detektionsdaten des zumindest einen Umfeldsensors von den Referenzdaten ermittelt. Falls die Abweichung der Detektionsdaten eines Umfeldsensors ein vorbestimmtes Indikatorkriterium erfüllt, wird zu dem jeweiligen Umfeldsensor, dessen Detektionsdaten das Indikatorkriterium erfüllen, ein Eintrag betreffend die Fehlfunktion des Umfeldsensors gespeichert. Es wird also zunächst einmal nur registriert, dass anhand der Detektionsdaten erkannt wurde, dass der Umfeldsensor möglicherweise eine Fehlfunktion aufweist. Als Eintrag kann beispielweise ein Zählerwert inkrementiert oder dekrementiert werden.

Während einer Fahrt des Kraftfahrzeugs kann somit bei Passieren eines Gatebereichs für den zumindest einen Umfeldsensor automatisiert eine Überprüfung von dessen Funktionstüchtigkeit, das heißt eine Erkennung einer Fehlfunktion, durchgeführt werden. Anhand der Referenzdaten ist beschrieben, welches tatsächlich vorhandene Objekt sich in dem Gatebereich befindet, sodass hierdurch eine Referenzwahrheit (Ground Truth) bereitgestellt ist, die genutzt werden kann, um die Detektionsdaten des zumindest einen Umfeldsensors auf Plausibilität, d.h. das Indikatorkriterium, zu überprüfen. Es wird hierzu eine Abweichung der jeweiligen Detektionsdaten des zumindest einen Umfeldsensors von den Referenzdaten ermittelt und falls die Abweichung das Indikatorkriterium erfüllt, wird zu dem jeweiligen Umfeldsensor, dessen Detektionsdaten das Indikatorkriterium erfüllen, ein Eintrag betreffend die Fehlfunktion des Umfeldsensors gespeichert. Der Eintrag signalisiert also eine mögliche Fehlfunktion.

Durch die Erfindung ergibt sich der Vorteil, dass ein Kraftfahrzeug selbstständig überprüfen kann, ob ein Umfeldsensor eine Fehlfunktion aufweist. Das Kraftfahrzeug kann diese Überprüfung während einer Fahrt entlang eines Straßennetzes vornehmen und zwar immer dann, wenn es einen Gatebereich passiert, zu welchem Referenzdaten vorliegen. Es kann für jeden Sensortyp ein anderer Gatebereich vorgesehen sein. Mittels des Verfahrens kann als Umfeldsensor beispielweise eine Kamera und/oder ein Radar und/oder ein Ultraschallsensor und/oder ein Lidar auf Fehlfunktion hin überprüft werden. Für jeden Sensortyp kann dabei ein anderer Gatebereich definiert oder vorgesehen sein.

Die Erfindung umfasst auch Ausführungsformen, durch die sich zusätzliche Vorteile ergeben.

Das besagte Indikatorkriterium ist ein Grenzmaß für die Abweichung oder ein Grenzwert für die Abweichung. Ist dieses Grenzmaß oder dieser Grenzwert überschritten (also das Indikatorkriterium erfüllt), so ist davon auszugehen, dass die Detektionsdaten eines jeweiligen Umfeldsensors aufgrund einer Fehlfunktion oder einer anderen Störung von den Referenzdaten abweichen. Deshalb wird ein Eintrag betreffend die Fehlfunktion des Umfeldsensors gespeichert. Das Indikatorkriterium kann beispielweise eine Abweichung in der Anzahl der detektierten Objekte, eine Fehlklassifizierung eines jeweiligen detektierten Objekts und/oder eine Positionsabweichung des jeweils detektierten Objekts beschreiben. Entsprechend beschreiben die Referenzdaten das zumindest eine tatsächlich vorhandene Objekt beispielweise in Bezug auf dessen Klasse und/oder Position und/oder Ausrichtung. Mit "Klasse" ist hierbei gemeint, dass eine Art des Objekts (zum Beispiel Straßenschild, Laterne, Brücke) angegeben ist.

Gemäß einer Ausführungsform ist hierbei durch das Indikatorkriterium zwischen einer Sensorblindheit und einer Dekalibrierung unterschieden. Bei der Sensorblindheit bleibt zumindest ein in dem Gatebereich tatsächlich vorhandenes Objekt undetektiert, das heißt es wird nicht in den Detektionsdaten angegeben oder beschrieben. Bei einer Dekalibrierung wird dagegen zumindest ein in dem Gatebereich tatsächlich vorhandenes Objekt zwar erkannt, aber an einer falschen Position und/oder mit einer falschen räumlichen Orientierung. Durch die Unterscheidung ergibt sich der Vorteil, dass auf einen Fehlertyp oder eine Fehlerart rückgeschlossen werden kann. Bei einer Sensorblindheit kann ein Sensor ausgefallen oder beispielweise durch Verschmutzung verdeckt sein. Bei einer Dekalibrierung ist dagegen davon auszugehen, dass der Umfeldsensor verstellt oder bewegt wurde und somit seine ursprüngliche räumliche Ausrichtung in Bezug auf den Rest des Kraftfahrzeugs verändert wurde. Dies kann beispielweise durch einen Stoß verursacht sein.

Eine Ausführungsform sieht vor, dass durch die Referenzdaten eine Klasse und/oder Position und/oder Abmessung und/oder Proportion (Seitenverhältnis) des zumindest einen tatsächlich vorhandenen Objekts beschrieben ist. Hierdurch ergibt sich der Vorteil, dass ein Aussehen (Klasse) und/oder geometrische Abmessungen genutzt werden können, um eine Fehlfunktion eines Umfeldsensors zu erkennen.

Gemäß einer Ausführungsform sind durch die Referenzdaten mehrere tatsächlich vorhandene Objekte beschrieben. Hierdurch ergibt sich der Vorteil, dass eine Ungenauigkeit oder Sensorstreuung eines Umfeldsensors mit einer geringeren Wahrscheinlichkeit zu einer falschen Positiverkennung einer Fehlfunktion führt. Grund dafür ist, dass bei mehreren Objekten eine Messungenauigkeit eines Umfeldsensors sich herausmitteln lässt. Wird dagegen nur ein einziges Objekt beschrieben, muss der Umfeldsensor beispielweise dessen Position genauer bestimmen, um eine Schräglage oder eine Veränderung der räumlichen Orientierung des Sensors zu erkennen. Sind dagegen mehrere Objekte durch die Referenzdaten beschrieben, kann eine Veränderung beispielweise der Drehlage oder allgemein der räumlichen Orientierung eines Umfeldsensors beispielweise aufgrund einer Veränderung der Verbindungslinien der Objekte, wie sie sich auf einem Kamerabild oder allgemein in den Detektionsdaten ergeben, erkannt werden. Bei mehreren Objekten ist insbesondere auch eine Triangulation und/oder Trilateration anhand der Sensordaten durchführbar, um eine räumliche Ausrichtung oder Orientierung des jeweiligen Umfeldsensors zu ermitteln.

Eine Ausführungsform sieht vor, dass durch die Referenzdaten ein Verhältnis von zumindest zwei charakteristischen Merkmalen des zumindest einen tatsächlich vorhandenen Objekts beschrieben ist. Es wird also kein absoluter Wert beschrieben, sondern ein relativer Wert, nämlich ein Verhältnis. Beispielsweise kann ein Schildabstand zur Straße im Verhältnis zur Spurbreite der Straße angegeben sein. Hierdurch ergibt sich der Vorteil, dass ein Unterschied in der Skalierung in den Detektionsdaten einerseits und in den Referenzdaten andererseits dennoch einen Vergleich der Detektionsdaten mit den Referenzdaten ermöglicht.

Eine Ausführungsform sieht vor, dass zu einem solchen Umfeldsensor, für den eine Anzahl an Einträgen betreffend die Fehlfunktion größer als ein vorbestimmter Schwellenwert ist, ein Fehlfunktionssignal erzeugt wird. Die Anzahl ist bevorzugt größer als 1, insbesondere größer als 3 oder 5. Mit anderen Worten wird also nicht gleich bei einem einzelnen Eintrag das Fehlfunktionssignal erzeugt, sondern erst nach Passieren mehrerer Gatebereiche wird das Fehlfunktionssignal dann erzeugt, wenn sich mehr als die vorgegeben Anzahl an Einträgen ergibt. Hierdurch kann kompensiert werden, dass in einem einzelnen Gatebereich eine Detektion eines tatsächlich vorhandenen Objekts auch aus anderen Gründen als einer Fehlfunktion fehlschlagen kann. Beispielsweise kann ein Objekt während eines Überholvorgangs durch ein anderes Kraftfahrzeug verdeckt sein, sodass es schon aus diesem Grund nicht mittels eines Umfeldsensors detektiert werden kann.

Falls das Fehlfunktionssignal erzeugt wird, so sieht eine Ausführungsform vor, dass in Abhängigkeit von dem Fehlfunktionssignal ein Warnhinweis an einen Benutzer ausgegeben wird und/oder eine Fahrzeugfunktion, welche die Sensordaten des (als fehlerhaft erkannten) Umfeldsensors nutzt, deaktiviert wird. Durch Ausgeben eines Hinweises ergibt sich der Vorteil, dass der Benutzer sein Verhalten an den als fehlerhaft erkannten Umfeldsensor anpassen kann. Durch Deaktivieren einer Fahrfunktion ergibt sich der Vorteil, dass vermieden ist, dass diese Fahrfunktion ein fehlerhaftes Steuersignal aufgrund fehlerhafter Sensordaten erzeugt. Eine Fahrzeugfunktion, die auf diese Weise deaktiviert wird, kann insbesondere ein Autopilot des Kraftfahrzeugs sein.

Eine Ausführungsform sieht vor, dass in Abhängigkeit von dem Fehlfunktionssignal eine vorbestimmte Heilungsmaßnahme zur Rekalibrierung eingeleitet wird und die Heilungsmaßnahme vorsieht, dass nach Durchfahren des Gatebereichs und/oder zumindest eines weiteren Gatebereichs anhand von dort jeweils ermittelten Sensordaten und zu dem jeweiligen Gatebereich vorhandenen oder bereitgestellten Referenzdaten jeweilige Kalibierdaten für den zumindest einen (als defekt erkannten) Umfeldsensor erzeugt werden. Es wird also das tatsächlich vorhandene zumindest eine Objekt und die hierzu vorhandenen Referenzdaten genutzt, um eine Kalibrierung eines Umfeldsensors des Kraftfahrzeugs durchzuführen. Durch die Kalibrierdaten wird eine Abbildungsvorschrift oder eine Abbildungsfunktion eingestellt, welche die Sensordaten auf die Referenzdaten abbildet. Mit anderen Worten werden mit den Kalibrierdaten Korrekturwerte bereitgestellt, um die Sensordaten zu korrigieren, sodass sie mit dem Referenzdaten übereinstimmen.

Eine Ausführungsform sieht vor, dass die Referenzdaten erzeugt werden, indem durch eine Servervorrichtung aus mehreren anderen Kraftfahrzeugen jeweilige Detektionsdaten zu Objekten entlang des Straßennetzes empfangen werden und ein Streckenabschnitt des Straßennetzes, in welchem die Detektion der dortigen Objekte ein vorbestimmtes Qualitätskriterium erfüllt, als der Gatebereich festgelegt wird. Die Detektionsdaten zu den Objekten entlang des Streckenabschnitts, der als Gatebereich festgelegt wird, werden zu den Referenzdaten kombiniert. Beispielsweise können sie zusammen als ein Datensatz gespeichert werden und/oder es kann ein Mittelwert aus den Detektionsdaten unterschiedlicher Kraftfahrzeuge gebildet werden. Das Qualitätskriterium kann beispielweise eine Mindestanzahl der vorhandenen Objekte vorgeben. Das Qualitätskriterium kann zusätzlich oder alternativ dazu beispielweise fordern, dass die Detektionsdaten jeweils mit einer vorbestimmten Mindestkonfidenz durch die Kraftfahrzeuge gebildet oder berechnet worden sein müssen. Somit kann automatisiert zumindest ein Gatebereich in dem besagten Straßennetz ermittelt werden. Ein Konfidenzwert kann z.B. durch eine Objekterkennungseinrichtung, welche die Detektionsdaten erzeugt, in aus dem Stand der Technik bekannter Weise erzeugt werden.

Zu der Erfindung gehört auch eine Steuervorrichtung für ein Kraftfahrzeug. Eine solche Steuervorrichtung kann beispielweise als Steuergerät für ein Kraftfahrzeug ausgestaltet sein. Die Steuervorrichtung weist eine Prozessoreinrichtung auf, die dazu eingerichtet ist, eine Ausführungsform des erfindungsgemäßen Verfahrens durchzuführen. Die Prozessoreinrichtung kann hierzu zumindest einen Mikrocontroller und/oder zumindest einen Mikroprozessor aufweisen. Die Verfahrensschritte können als Programmcode für die Prozessoreinrichtung realisiert sein. Der Programmcode kann in einem Datenspeicher der Prozessoreinrichtung gespeichert sein.

Das besagte Kraftfahrzeug ist insbesondere ein Kraftwagen, bevorzugt ein Personenkraftwagen oder Lastkraftwagen.

Die Erfindung umfasst auch die Kombinationen der Merkmale der beschriebenen Ausführungsformen.

Im Folgenden sind Ausführungsbeispiele der Erfindung beschrieben. Hierzu zeigt:
- Fig. 1: eine Skizze zur Veranschaulichung eines Gatebereichs für die Fehlererkennung;
- Fig. 2: ein Flussschaudiagramm zur Veranschaulichung einer Ausführungsform des erfindungsgemäßen Verfahrens; und
- Fig. 3: eine Skizze zur Veranschaulichung einer Heilungsmaßnahme für einen dekalibrierten Umfeldsensor eines Kraftfahrzeugs.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren kennzeichnen gleiche Bezugszeichen jeweils funktionsgleiche Elemente.

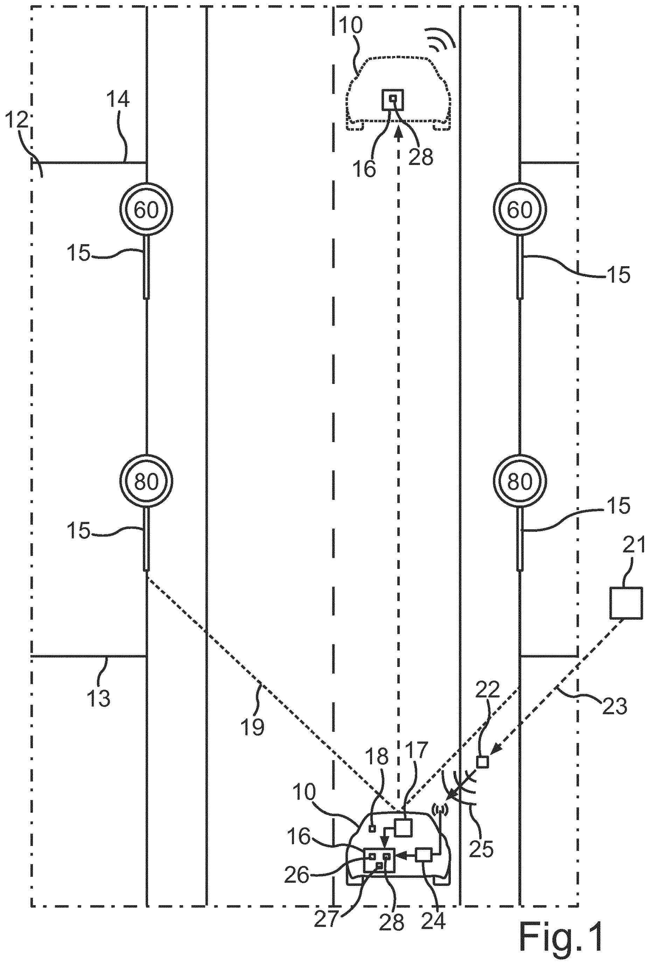

Fig. 1 zeigt ein Kraftfahrzeug 10, das entlang eines Straßennetzes 11 fährt und dabei einen Messbereich oder Gatebereich 12 passiert. Der Gatebereich 12 kann beispielweise durch eine Eintrittsgrenze 13 und eine Austrittsgrenze 14 begrenzt sein. In dem Gatebereich 12 können sich Objekte 15 befinden, insbesondere stationäre Objekte, wie beispielweise Straßenschilder. Der Gatebereich 12 kann von einer Steuervorrichtung 16 des Kraftfahrzeugs 10 dazu genutzt werden, zumindest einen Umfeldsensor 17 daraufhin zu überprüfen, ob der Umfeldsensor 17 korrekt arbeitet oder funktioniert oder im Gegenteil dazu eine Fehlfunktion aufweist. Die Steuervorrichtung 16 kann hierzu Sensordaten 18 des Umfeldsensors 17 empfangen. Ein Empfangsbereich 19 des Umfeldsensors 17 kann hierbei in den Gatebereich 12 ausgerichtet sein, sodass mittels des Umfeldsensors 17 die Objekte 15 erfasst und durch die Sensordaten 18 beschrieben werden sollten, wenn der Umfeldsensor 17 eine Fehlfunktion aufweist. Anhand der Sensordaten 18 können durch die Steuervorrichtung 16 oder durch ein anderes Steuergerät Detektionsdaten 20 ermittelt werden, welche die durch den Umfeldsensor 17 erfassten Objekte beschreiben.

Eine Servervorrichtung 21 kann dem Kraftfahrzeug 10 Referenzdaten 22 bereitstellen, welche beschrieben, welches tatsächlich vorhandene Objekt 15 in dem Gatebereich 12 vorhanden ist oder angeordnet ist. Die Servervorrichtung 21 kann beispielweise ein Server des Internets sein. Die Referenzdaten 22 können über eine Kommunikationsverbindung 23 beispielweise zu einer Kommunikationseinrichtung 24 des Kraftfahrzeugs 10 übertragen werden. Die Kommunikationsverbindung 23 kann hierbei auch eine Funkverbindung 25 umfassen, die beispielweise auf der Grundlage eines Mobilfunkstandards (zum Beispiel 3G und/oder 4G und/oder 5G) realisiert sein kann. Die Kommunikationseinrichtung 24 kann entsprechend ein Mobilfunkmodul aufweisen. Die Funkverbindung 25 kann auch auf der Grundlage einer WLAN-Verbindung (WLAN - Wireless Local Area Network) realisiert sein. Die Kommunikationseinrichtung 24 kann entsprechend ein WLAN-Funkmodul umfassen. Die empfangenen Referenzdaten 22 können der Steuervorrichtung 16 bereitgestellt werden. Die Steuervorrichtung 16 kann nun die Detektionsdaten 20 mit den Referenzdaten 22 vergleichen. Es kann eine Abweichung 26 der Detektionsdaten 20 von den Referenzdaten 22 ermittelte werden und überprüft werden, ob die Abweichung 26 ein vorbestimmtes Indikatorkriterium 27 erfüllt. Falls das Indikatorkriterium 27 erfüllt ist, kann in dem SG 16 und/oder in der Servereinrichtung 21 jeweils ein Eintrag 28 betreffend des erfüllt sein des Indikatorkriteriums 27 für den Gatebereich 12 gespeichert werden. Das Kraftfahrzeug 10 kann hierzu den Eintrag 28 an die Servereinrichtung 21 signalisieren.

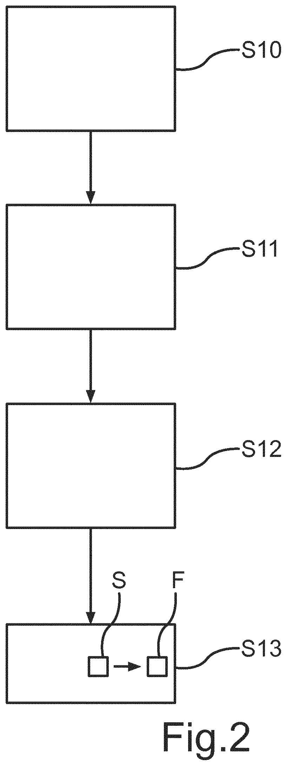

Somit ergibt sich insgesamt das in Fig. 2 veranschaulichte Verfahren, bei welchem in einem Schritt S10 zumindest ein Umfeldsensor 17 betrieben wird, während das Kraftfahrzeug 10 den Gatebereich 12 passiert. Anhand von jeweiligen Sensordaten 18 des zumindest einen Umfeldsensors 17 werden in einem Schritt S11 jeweilige Detektionsdaten 20 ermittelt, wobei die jeweiligen Detektionsdaten 20 jeweils beschreiben, welches zumindest eine Objekt in dem Gatebereich 12 durch den jeweiligen Umfeldsensor 17 erfasst wurde.

In einem Schritt S12 kann in dem Kraftfahrzeug anhand der Referenzdaten 22, das zumindest eine in dem Gatebereich 12 tatsächlich vorhandene Objekt 15 beschreiben, die Abweichung 26 der jeweiligen Detektionsdaten 20 von den Referenzdaten 22 ermittelt werden und in einem Schritt S13 für den Fall, dass die Abweichung das Indikatorkriterium 27 erfüllt, zu dem jeweiligen Umfeldsensor 17, dessen Detektionsdaten 20 des Indikatorkriterium 27 erfüllen, ein Eintrag 28 betreffend die mögliche Fehlfunktion des Umfeldsensors 17 gespeichert werden.

Die Referenzdaten 22 und die Detektionsdaten 20 können jeweils beispielweise folgende charakteristische Merkmale oder KPIs (Key Performance Index) für einen Umfeldsensor angeben: bei einer Verkehrszeichenerkennung kann dies die Symbolklassifikation und/oder die Position sein. Bei einer Spurerkennung kann dies die Spurbreite und/oder die Linienkrümmung sein. Weitere Möglichkeiten sind die Beschreibung von Straßenleuchten (bei Nacht) und/oder ein Oberflächenprofil oder Bumperprofil.

Ein Gatebereich 12 kann beispielweise durch seine GPS-Position oder allgemein seine Geoposition beschrieben werden und/oder seinen Status (ob er neu ist oder bereits mehrfach bestätigt wurde). Es können die für den Gatebereich vorgesehenen oder betroffenen Umfeldsensoren und/oder die für die Erzeugung von Detektionsdaten vorgesehenen Wahrnehmungsmodule angegeben werden. Schließlich können Benchmark-Ergebnisse für die charakteristischen Merkmale, das heißt Toleranzschwellen und/oder Toleranzbereiche, angegeben werden, durch welche dann das Indikatorkriterium definiert ist.

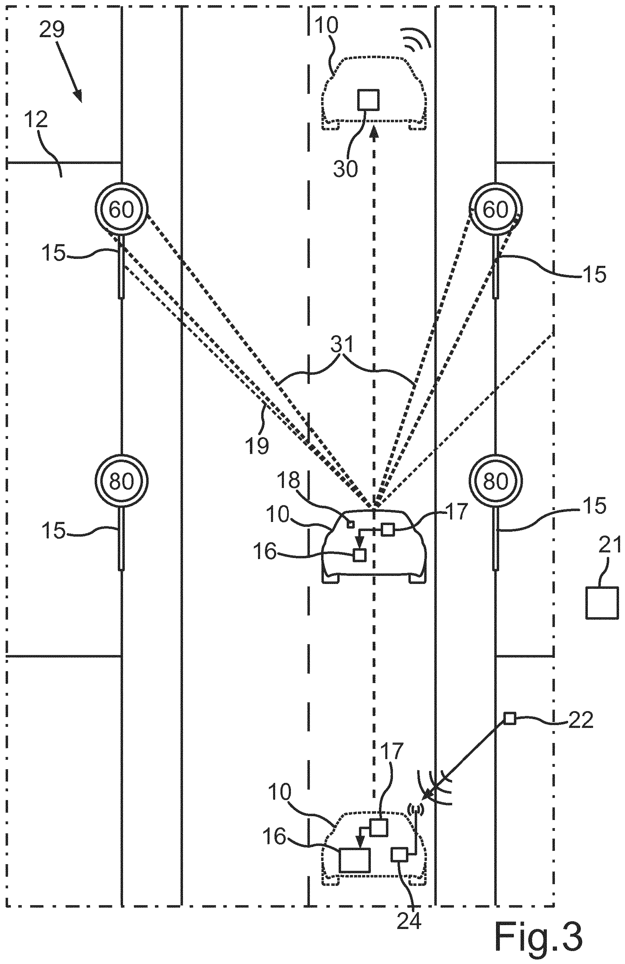

Fig. 3 veranschaulicht, wie für den Fall, dass mehrere Einträge 28 für unterschiedliche Gatebereiche 12 erkennen lassen, dass ein Umfeldsensor 17 des Kraftfahrzeugs 10 defekt oder funktionsuntüchtig ist oder eine Fehlfunktion aufweist, eine Heilungsmaßnahme 29 zum Erzeugen neuer Kalibrierdaten 30 durchgeführt werden kann. Die in dem Gatebereich 12 vorhandenen Objekte 15 können als Kalibrierungslandmarken genutzt werden. Es können Referenzdaten 22 betreffend Positionen und/oder Merkmalen von Kalibrierungslandmarken empfangen werden, sowie die Geoposition des Gatebereichs 12. Während das Kraftfahrzeug 10 dann den Gatebereich 12 passiert, kann anhand der Sensordaten 18 des zu kalibrierenden Umfeldsensors 17 und der Referenzdaten 22 durch die Steuervorrichtung 16 eine Kalibrierung vorgenommen werden. Diese kann vorsehen, dass die Kalibrierungslandmarken, das heißt die Objekte 15, detektiert werden und dann Korrekturdaten, die als Kalibrierdaten 30 genutzt werden können, ermittelt werden. Bei einer Kamera kann dies beispielweise die Berechnung der extrinsischen Kameraparameter sein. Hierzu kann eine Triangulation 31 mehrerer Objekte 15 im Gatebereich 12 genutzt werden.

Falls die Anzahl der Einträge einen vorbestimmten Schwellenwert S überschreitet, kann vorgesehen sein, dass ein Fehlfunktionssignal F erzeugt wird, welches eine Fehlfunktion des Umfeldsensors 17 signalisiert. Es kann dann eine Heilungsmaßnahme für den Umfeldsensor ausgelöst werden.

Die Servervorrichtung 21 kann dann über die Kalibrierung oder den ermittelten Kalibrierungsfehler informiert werden. Es kann auch vorgesehen sein, dass die Steuervorrichtung 16 eine Anfrage bei einem Servicedienst oder einer Wartung oder einer Werkstatt für einen Termin aussendet, um die Reparatur oder Neukalibrierung des Umfeldsensors mittels eines Kalibriergeräts in einer Werkstatt zu organisieren.

Durch die Vernetzung von Fahrzeugen über ein Backend in Form einer Servervorrichtung 21 können die Performanceleistung und Detektionsergebnisse von Sensorsystemen verschiedener Fahrzeuge miteinander verglichen werden. Dazu werden virtuelle Gatebereiche an signifikanten Orten/Streckenabschnitten genutzt, die im Backend registriert werden und einen Abgleich zwischen den einzelnen vernetzten Fahrzeugen ermöglichen.

Für die Vergleichbarkeit werden Key Performance Indicators (KPIs) verwendet, die charakteristische Merkmale von detektierten Objekten, Landmarken oder Strukturen (z. B. Spurbreite, Position und Klasse von Verkehrszeichen) darstellen. Wird eine im Vergleich zu anderen Fahrzeugen mangelhafte Performance eines Umfeldsensors festgestellt, wird der Fahrer über die Störung informiert und betroffene sicherheitskritische Funktionen können deaktiviert werden, bis die Fehlfunktion behoben ist.

Des Weiteren können die Informationen dazu genutzt werden, um eine erste Fehlerdiagnose durchzuführen, d. h. welcher Sensor betroffen ist und ob die Ursache Sensorblindheit oder Dekalibrierung ist. Abhängig von der Art und Schwere der Störung werden geeignete Maßnahmen zur Behebung des Fehlers eingeleitet.

Dies bietet die Möglichkeit, Funktionseinschränkungen/-störungen in Sensorsystemen schnell und zuverlässig zu detektieren. Die dafür nötige Referenzwahrheit wird dabei von der vernetzten Fahrzeugflotte und bestehenden Landmarken und Merkmalen (allgemein Objekten) im Straßennetz geliefert. Abhängig von der Art der Störung werden geeignete Folgemaßnahmen eingeleitet, um die Dauer der Störung zu minimieren. Durch das Konzept werden die Verfügbarkeit und Zuverlässigkeit des Sensorsystems sowie die funktionale Robustheit darauf basierender automatisierter Fahrfunktionen erhöht. Gleichzeitig wird die Wahrscheinlichkeit gesenkt, dass ein Fehler im Sensorsystem fälschlicherweise detektiert und der Benutzer grundlos zum Kundendienst gebeten wird (Senkung der False-Positive-Rate).

Gatebereiche werden an Orten generiert, die durch ihre Beschaffenheit für eine solche Überprüfung besonders geeignet sind. Die gewählten Orte weisen Objekte, Landmarken oder Strukturen auf, die von dem jeweiligen Sensor unter normalen Umständen sehr robust erkannt werden, und sind ggf. nur für einzelne Sensortypen (Kamera, Laser, Radar) und Verbaupositionen (Front, Seite, Heck) relevant. Für Kamerasysteme kann das z. B. ein Ort oder Streckenabschnitt mit fest installierten Verkehrszeichen und Spurmarkierungen sein (siehe Fig. 1).

Wird ein geeigneter Streckenabschnitt das erste Mal von einem vernetzten Fahrzeug durchfahren, werden die GPS-Daten und detektierten Objekte (inkl. Eigenschaften wie Klasse und Position) an das Backend übertragen und dort als Gatebereich registriert. Das Backend sendet die Positionen und KPIs relevanter Gatebereiche an die vernetzte Fahrzeugflotte. Durchfährt eines dieser Fahrzeuge nun einen Streckenabschnitt mit Gatebereich, dokumentiert es die Detektionsergebnisse seines Sensorsystems, gleicht die Performance mit dem aktuellen Benchmark ab und sendet signifikante Abweichungen (positiv wie negativ) zurück an das Backend. Die Rückmeldungen der Fahrzeugflotte werden dazu genutzt, um die KPIs der Gatebereiche im Backend kontinuierlich zu aktualisieren.

Zeigen sich (wiederholt) signifikante negative Auffälligkeiten bei einem einzelnen Fahrzeug, wird der Fahrer darüber informiert und der Fehler wird analysiert, um geeignete Folgemaßnahmen einzuleiten. Eine Sensorblindheit durch Wettereinflüsse ist i. d. R. nur temporär, es sind keine weiteren Maßnahmen nötig. Bei einer Verschmutzung des Sensors wird der Fahrer dagegen gebeten, den entsprechenden Sensor zu reinigen. Im Fall einer Dekalibrierung kann ein Selbstheilungsprozess durch Rekalibrierung gestartet werden, der die extrinsischen Parameter des Sensors anhand vom Backend übertragener Landmarken in einem geeigneten Streckenabschnitt (Sensor Calibration Gate) neu berechnet (siehe Fig. 3).

Liegt eine Störung nach Abschluss der Heilungsmaßnahmen weiterhin vor, wird der Benutzer gebeten, den Kundendienst aufzusuchen. Sind von der Sensoreinschränkung hochautomatisierte Fahrfunktionen (Level 3-5) betroffen, werden diese ebenfalls über die Störung informiert und ggf. sicherheitshalber deaktiviert.

Insgesamt zeigen die Beispiele, wie durch die Erfindung Sensor-Gatebereiche zur Diagnose zumindest eines gestörten Fahrzeugumfeldsensors mittels Schwarmdaten mehrerer Kraftfahrzeuge definiert werden können.

## Patentansprüche

1. Verfahren zum Erkennen einer Fehlfunktion zumindest eines Umfeldsensors (17) eines Kraftfahrzeugs (10), wobei der zumindest eine Umfeldsensor (17) betrieben wird, während das Kraftfahrzeug (10) einen vorbestimmten Gatebereich (12) eines Straßennetzes (11) passiert, und anhand von jeweiligen Sensordaten (18) des zumindest einen Umfeldsensors (17) jeweilige Detektionsdaten (20) ermittelt werden, wobei die jeweiligen Detektionsdaten (20) jeweils beschreiben, welches zumindest eine Objekt in dem Gatebereich (12) anhand der Sensordaten des jeweiligen Umfeldsensors (17) erkannt wurde,
wobei in dem Kraftfahrzeug (10) Referenzdaten (22), die zumindest ein in dem Gatebereich (12) tatsächlich vorhandenes Objekt (15) beschreiben, bereitgehalten werden und eine Abweichung (26) der jeweiligen Detektionsdaten (20) von den Referenzdaten (22) ermittelt wird, und falls die Abweichung (26) ein vorbestimmtes Indikatorkriterium (27) erfüllt, zu dem jeweiligen Umfeldsensor (17), dessen Detektionsdaten (20) das Indikatorkriterium (27) erfüllen, ein Eintrag (28) betreffend die Fehlfunktion des Umfeldsensors (17) gespeichert wird, **dadurch gekennzeichnet, dass** durch die Referenzdaten (22) ein Verhältnis von zumindest zwei charakteristischen Merkmalen des zumindest einen tatsächlich vorhandenen Objekts (15) beschrieben ist.

2. Verfahren nach Anspruch 1, wobei durch das Indikatorkriterium (27) zwischen einer Sensorblindheit, bei welcher zumindest ein in dem Gatebereich (12) tatsächlich vorhandenes Objekt (15) undetektiert bleibt, und einer Dekalibrierung, bei welcher zumindest ein in dem Gatebereich (12) tatsächlich vorhandenes Objekt (15) an einer falschen Position und/oder mit einer falschen räumlichen Orientierung erkannt wird, unterschieden wird.

3. Verfahren nach einem der vorhergehenden Ansprüche, wobei durch die Referenzdaten (22) eine Klasse und/oder Position und/oder Abmessung und/oder Proportion des zumindest einen tatsächlich vorhandenen Objekts (15) beschrieben ist.

4. Verfahren nach einem der vorhergehenden Ansprüche, wobei durch die Referenzdaten (22) mehrere tatsächlich vorhandene Objekte (15) beschrieben sind.

5. Verfahren nach einem der vorhergehenden Ansprüche, wobei zu einem solchen Umfeldsensor (17), für den eine Anzahl an Einträgen (28) betreffend die Fehlfunktion größer als ein vorbestimmter Schwellenwert (S) ist, ein Fehlfunktionssignal (F) erzeugt wird.

6. Verfahren nach Anspruch 5, wobei in Abhängigkeit von dem Fehlfunktionssignal (F) ein Warnhinweis an einen Benutzer ausgegeben wird und/oder eine Fahrzeugfunktion, welche die Sensordaten (18) des Umfeldsensors (17) nutzt, deaktiviert wird.

7. Verfahren nach Anspruch 5 oder 6, wobei in Abhängigkeit von dem Fehlfunktionssignal (F) eine vorbestimmte Heilungsmaßnahme (29) zur Rekalibrierung eingeleitet wird und die Heilungsmaßnahme (29) vorsieht, dass nach Durchfahren des Gatebereichs (12) und/oder zumindest eines weiteren Gatebereichs anhand von dort jeweils ermittelten Sensordaten (18) und zu dem jeweiligen Gatebereich (12) vorhandenen Referenzdaten (22) jeweilige Kalibierdaten (30) für den zumindest einen Umfeldsensor (17) erzeugt werden.

8. Verfahren nach einem der vorhergehenden Ansprüche, wobei die Referenzdaten (22) erzeugt werden, indem durch eine Servervorrichtung (21) aus mehreren anderen Kraftfahrzeugen jeweilige Detektionsdaten zu Objekten entlang des Straßennetzes (11) empfangen werden und ein Streckenabschnitt des Straßennetzes (11), in welchem die Detektion der dortigen Objekte (15) ein vorbestimmtes Qualitätskriterium erfüllt, als der Gatebereich (12) festgelegt wird und die Detektionsdaten zu den Objekten (15) entlang des Streckenabschnitts zu den Referenzdaten (22) kombiniert werden.

9. Steuervorrichtung (16) für ein Kraftfahrzeug (10), wobei die Steuervorrichtung (16) eine Prozessoreinrichtung aufweist, die dazu eingerichtet ist, ein Verfahren nach einem der Ansprüche 1 bis 7 durchzuführen.

## Claims

1. Method for detecting a malfunction of at least one environment sensor (17) of a motor vehicle (10), wherein the at least one environment sensor (17) is operated when the motor vehicle (10) passes a predefined gate area (12) of a road network (11), and respective detection data (20) are determined with reference to respective sensor data (18) of the at least one environment sensor (17), wherein the respective detection data (20) describe respectively which at least one object has been detected in the gate area (12) by means of sensor data of the respective environment sensor (17),
wherein in the motor vehicle (10) reference data (22) are kept ready, which describe at least one object (15) actually present in the gate area (12), and a deviation (26) of the respective detection data (20) from the reference data (22) is determined,
and if the deviation (26) meets a predetermined indicator criterion (27), an entry (28) relating to the malfunction of the environment sensor (17) is saved to the respective environment sensor (17), whose detection data (20) meet the indicator criterion (27), **characterised in that** by means of the reference data (22) a ratio of at least two characteristic features of the at least one actually present object (15) is described.

2. Method according to claim 1, wherein by means of the indicator criterion (27) a distinction is made between sensor blindness, in which at least one object (15) actually present in the gate area (12) remains undetected, and a decalibration, in which at least one object (15) actually present in the gate area (12) is detected in an incorrect position and/or with an incorrect spatial orientation.

3. Method according to any of the preceding claims, wherein a class and/or position and/or dimension and/or proportion of the at least one actually present object (15) is described by means of the reference data (22).

4. Method according to any of the preceding claims, wherein a plurality of actually present objects (15) are described by means of the reference data (22).

5. Method according to any of the preceding claims, wherein a malfunction signal (F) is generated to such an environment sensor (17), for which a number of entries (28) relating to the malfunction is greater than a predetermined threshold (S).

6. Method according to claim 5, wherein as a function of the malfunction signal (F) a warning message is output to a user, and/or a vehicle function, which uses the sensor data (18) of the environment sensor (17), is deactivated.

7. Method according to claim 5 or 6, wherein as a function of the malfunction signal (F) a predetermined recovery measure (29) is introduced for recalibration and the recovery measure (29) ensures that after passing through the gate area (12) and/or at least one further gate area, by means of sensor data (18) determined there respectively and reference data (22) relating to the respective gate area (12), respective calibration data (30) are generated for the at least one environment sensor (17).

8. Method according to any of the preceding claims, wherein the reference data (22) are generated in that respective detection data from a plurality of other motor vehicles on objects along the road network (11) are received through a server device (21) and a section of the road network (11), on which the detection of local objects (15) meets a predefined quality criterion, is established as the gate area (12) and the detection data on the objects (15) along the road section are combined to form the reference data (22).

9. Control device (16) for a motor vehicle (10), wherein the control device (16) has a processor device which is configured to perform a method according to any of claims 1 to 7.

## Revendications

1. Procédé pour identifier un dysfonctionnement d'au moins un capteur d'environnement (17) d'un véhicule à moteur (10), dans lequel l'au moins un capteur d'environnement (17) fonctionne tandis que le véhicule à moteur (10) traverse une zone à l'arrière (12) prédéfinie d'un réseau routier (11), et des données de détection (20) respectives sont déterminées à l'aide de données de capteur (18) respectives de l'au moins un capteur d'environnement (17), dans lequel les données de détection (20) respectives décrivent respectivement l'au moins un objet, qui a été identifié dans la zone à l'arrière (12) à l'aide des données de capteur du capteur d'environnement (17) respectif,
dans lequel des données de référence (22), qui décrivent au moins un objet (15) dans les faits présent dans la zone à l'arrière (12), sont fournies dans le véhicule à moteur (10) et un écart (26) des données de détection (20) respectives par rapport aux données de référence (22) est déterminé,
et
si l'écart (26) remplit un critère indicateur (27) prédéfini par rapport au capteur d'environnement (17) respectif, dont des données de détection (20) remplissent le critère indicateur (27), une entrée (28) concernant le dysfonctionnement du capteur d'environnement (17) est mémorisée, **caractérisé en ce que**
un rapport entre au moins deux caractéristiques typiques de l'au moins un objet (15) dans les faits présent est décrit par les données de référence (22).

2. Procédé selon la revendication 1, dans lequel une distinction est faite par un critère indicateur (27) entre un aveuglement de capteur, pour lequel au moins un objet (15) dans les faits présent dans la zone à l'arrière (12) reste non détecté, et un dérèglement de l'étalonnage, pour lequel au moins un objet (15) dans les faits présent dans la zone à l'arrière (12) est identifié sur une mauvaise position et/ou avec une mauvaise orientation spatiale.

3. Procédé selon l'une quelconque des revendications précédentes, dans lequel une classe et/ou une position et/ou une dimension et/ou une proportion de l'au moins un objet (15) dans les faits présent est décrite par les données de référence (22).

4. Procédé selon l'une quelconque des revendications précédentes, dans lequel plusieurs objets (15) dans les faits présents sont décrits par les données de référence (22).

5. Procédé selon l'une quelconque des revendications précédentes, dans lequel un signal de dysfonctionnement (F) est généré pour un capteur d'environnement (17) tel, pour lequel un nombre d'entrées (28) concernant le dysfonctionnement est supérieur à une valeur de seuil (S) prédéfinie.

6. Procédé selon la revendication 5, dans lequel une alerte est envoyée à un utilisateur en fonction du signal de dysfonctionnement (F) et/ou une fonction de véhicule, laquelle utilise les données de capteur (18) du capteur d'environnement (17), est désactivée.

7. Procédé selon la revendication 5 ou 6, dans lequel une mesure de réparation (29) prédéfinie pour le réétalonnage est initiée en fonction du signal de dysfonctionnement (F) et la mesure de réparation (29) prévoit que des données d'étalonnage (30) respectives pour l'au moins un capteur d'environnement (17) sont générées après le passage de la zone à l'arrière (12) et/ou d'au moins une autre zone à l'arrière à l'aide de données de capteur (18) déterminées respectivement à cet endroit et de données de référence (22) présentes pour la zone à l'arrière (12) respective.

8. Procédé selon l'une quelconque des revendications précédentes, dans lequel les données de référence (22) sont générées en ce que des données de détection respectives concernant des objets le long du réseau routier (11) sont reçues par un dispositif de serveur (21) depuis plusieurs autres véhicules à moteur et un tronçon du réseau routier (11), dans lequel la détection des objets (15) s'y trouvant remplit un critère de qualité prédéfini, est fixé en tant que la zone à l'arrière (12) et les données de détection concernant les objets (15) le long du tronçon sont combinées en les données de référence (22).

9. Dispositif de commande (16) pour un véhicule à moteur (10), dans lequel le dispositif de commande (16) présente un système de processeur qui est mis au point pour mettre en œuvre un procédé selon l'une quelconque des revendications 1 à 7.
